# EUROPEAN PATENT APPLICATION

(11) **EP 4 786 431 A1**
(43) Date of publication of application: **05.08.2026**
(21) Application number: 24872353.8
(22) Date of filing: 26.09.2024
(51) Int. Cl.: C03C 17/38, C03C 27/06, E06B 3/66, H01Q 15/14

(54) **WINDOW MATERIAL AND METHOD FOR PRODUCING WINDOW MATERIAL**

(30) Priority: 29.09.2023 JP 2023170365
(71) Applicant: Sekisui Chemical Co., Ltd., Osaka-shi, Osaka 530-8565 (JP)
(72) Inventor: AKAGI, Yoshinori, Mishima-gun, Osaka 618-0021 (JP); SHIONOYA, Kenta, Mishima-gun, Osaka 618-0021 (JP); OGAWA, Hiroshi, Mishima-gun, Osaka 618-0021 (JP); FUKUYAMA, Shinjiro, Mishima-gun, Osaka 618-0021 (JP); NOMOTO, Hiroyuki, Mishima-gun, Osaka 618-0021 (JP)
(74) Representative: Ter Meer Steinmeister & Partner
(86) International application number: PCT/JP2024/034340
(87) International publication number: WO 2025/070567

(57) **Abstract**

Provided are a window material that can enhance radio wave transmittance only for radio waves in a specific frequency band while having a function of reflecting or shielding waves and has high manufacturability, and a method for producing the window material. A window material 1 includes at least one transparent plate 2, a metal layer 3 that is stacked on the at least one transparent plate 2, and at least one metasurface film 4. The metasurface film 4 includes a base material 42 that is attached to the transparent plate 2 or the metal layer 3 and metal patterns 41 that are formed on the base material 42.

## Description

### Technical Field

The present invention relates to a window material and a method for producing a window material.

### Background Art

PTL 1 discloses a conventional window material (glass body in PTL 1). In the glass body in PTL 1, a low-emission film (low-E film) is formed on the entire surface of a glass plate. It is known that the glass body with the low-E film formed thereon has low transmittance to radio waves in a wide frequency range. For this reason, in PTL 1, a portion of the low-E film is removed by laser machining to form a radio wave transmission region.

### Citation List

### Patent Literature

PTL 1: Japanese Patent Application Publication No. 2023-113772

### Summary of Invention

### Technical Problem

However, it is not possible to state that good manufacturability can be achieved while such a work to remove a portion of the low-E film in manufacturing the glass body is performed.

The present invention is made in view of the above-described circumstances, and an object thereof is to provide a window material that can enhance radio wave transmittance only for radio waves in a specific frequency band while having a function of reflecting or shielding radio waves and has high manufacturability, and a method for producing the window material.

### Solution to Problem

In order to achieve the above object, the present invention includes the subject matters described in the following items.

Item 1. A window material including:
at least one transparent plate;
a metal layer that is stacked on the at least one transparent plate; and
at least one metasurface film,
in which the metasurface film includes
a base material that is attached to the transparent plate or the metal layer, and
metal patterns that are formed on the base material.

Item 2. The window material according to Item 1,
in which a plurality of transparent plates disposed at intervals are included as the at least one transparent plate, and
at least one of the metasurface films is attached to a transparent plate that is different from the transparent plate with the metal layer stacked thereon.

Item 3. The window material according to Item 1,
in which the at least one transparent plate includes a first surface and a second surface on a side opposite to the first surface,
the metal layer is stacked on the first surface, and
   at least one of the metasurface films is attached to the second surface.

Item 4. The window material according to any one of Items 1 to 3,
in which a first metasurface film and a second metasurface film are included as the at least one metasurface film,
the first metasurface film is for uplink, and
the second metasurface film is for downlink.

Item 5. The window material according to Item 4, in which the first metasurface film and the second metasurface film are disposed not to overlap one another in a plan view seen from a direction orthogonal to a surface of the window material.

Item 6. The window material according to Item 4 or 5, in which the first metasurface film is provided on a side further inward than the second metasurface film in a building to which the window material is attached.

Item 7. The window material according to any one of Items 1 to 6,
in which each of the metal patterns is constituted of a linear body, and
a maximum width of the linear body is equal to or less than 100 µm.

Item 8. The window material according to any one of Items 1 to 7, in which the metasurface film further includes a protective film that covers the metal patterns.

Item 9. The window material according to Item 8, in which the protective film contains fluorine.

Item 10. The window material according to any one of Items 1 to 9, in which the metal layer is a low-E film.

Item 11. The window material according to any one of Items 1 to 9, in which the metal layer is a thermal-insulating film.

Item 12. A method for producing a window material, including:
attaching, to at least one transparent plate with a metal layer stacked thereon,
a metasurface film including a base material and metal patterns formed on the base material.

### Advantageous Effects of Invention

The window material and the method for producing a window material of the above aspects according to the present invention have advantages that it is possible to provide a window material that can enhance radio wave transmittance only for radio waves in a specific frequency band while having a function of reflecting or shielding radio waves and has high manufacturability, and a method for producing the window material.

### Brief Description of Drawings

Fig. 1 is a sectional view of a window material according to an embodiment.
Fig. 2 is a front view of a metasurface film according to the embodiment.
Fig. 3 is a sectional view of the metasurface film according to the embodiment.
Fig. 4 is a front view of a metasurface film according to a Modification example 1.
Fig. 5 is a sectional view of a window material according to a Modification example 2.
Fig. 6 is a sectional view of a window material according to a Modification example 3.
Fig. 7 is a sectional view of a window material according to a Modification example 4.
Fig. 8 is a sectional view of the window material according to the Modification example 4.
Figs. 9(A) and 9(B) are graphs of evaluation test results.

### Description of Embodiments

### Embodiment

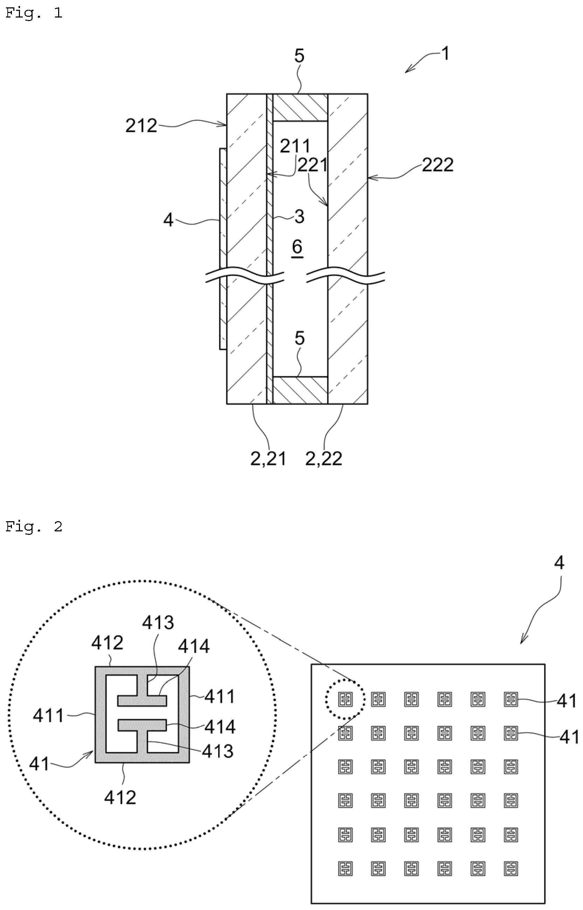

An embodiment of the present invention will be described below with reference to the drawings. As illustrated in Fig. 1, a window material 1 according to the present embodiment is a paired glass including a plurality of transparent plates 2. The window material 1 includes the plurality of transparent plates 2, a metal layer 3, and at least one metasurface film 4. Furthermore, the window material 1 includes spacers 5 for maintaining distances between the plurality of transparent plates 2.

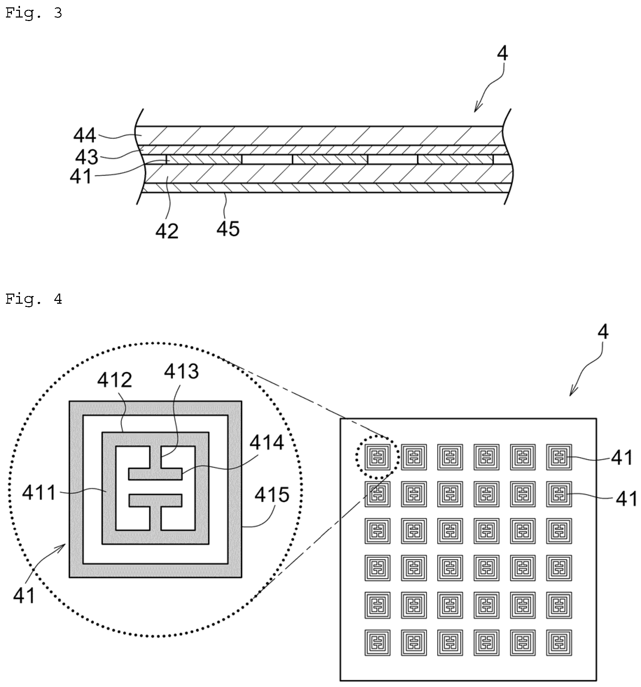

As illustrated in Figs. 2 and 3, the metasurface film 4 includes a base material 42 attached to the transparent plate 2 or the metal layer 3, and a metal pattern 41 formed on the base material 42.

Since the window material 1 according to the present embodiment is constructed in this manner, it is possible to enhance radio wave transmittance only for radio waves in a specific frequency band while reflecting or shielding radio waves by the metal layer 3. Furthermore, it is only necessary to attach the metasurface film 4 to the window material 1 with the existing metal layer 3 stacked thereon, and it is thus possible to obtain the window material 1 with high manufacturability.

The window material 1 according to the present embodiment is used for a lighting window of a door, a fixed window of a ceiling, a floor, and the like in addition to a window glass of a building, for example. The window material 1 according to the present embodiment can be used for a window of an automobile, an aircraft, a ship, a train, a cable car, and the like in addition to a building.

In the window material 1, the radio waves in the specific frequency band for which the radio wave transmittance can be enhanced are preferably any radio waves belonging to a range of equal to or greater than 0.5 GHz and equal to or less than 60 GHz. In the present embodiment, the transparent plates 2 are set to have high radio wave transmittance in a frequency band of 5G (equal to or greater than 3 GHz and equal to or less than 5 GHz, equal to or greater than 25 GHz and equal to or less than 30 GHz). However, in the window material 1, there is no particular limitation on a frequency band for which the radio wave transmittance is to be enhanced. The specific frequency band for which the radio wave transmittance is to be enhanced can be set to a desired frequency band by changing the shape of the metal pattern 41 on the metasurface film 4.

### Transparent plate 2

The transparent plate 2 is a transparent plate member. Although "transparent" described in the present specification only requires light transmittance of equal to or greater than 10% with respect to a peak wavelength of light before being incident, the light transmittance is preferably equal to or greater than 50% and is more preferably equal to or greater than 80%. In other words, "translucent" indicating light transmittance of about 30%, for example, with respect to the peak wavelength of the light before being incident is also included in "transparent" described in the present specification. Also, the transparent plates 2 are not limited to colorless and transparent plates, and may be colored plates.

The transparent plates 2 according to the present embodiment are preferably glass plates. Examples of the glass plates include float plate glass, template glass, ground glass, wired glass, reinforced glass, and the like. However, examples of the transparent plates 2 also include acrylic plates and polycarbonate plates in addition to the glass plates.

The shape of the transparent plates 2 is not particularly limited. Examples of the shape of the transparent plates 2 include a rectangular shape in a plan view, a circular shape in a plan view, a pentagon shape in a plan view, a hexagon shape in a plan view, an elliptical shape in a plan view, and the like. The term "in a plan view" described herein means that a main surface of each transparent plate 2 is viewed in a direction orthogonal to the main surface.

As illustrated in Fig. 1, the plurality of transparent plates 2 are disposed at constant intervals in a thickness direction of the window material 1. One of the adjacent transparent plates 2 may be referred to as a "first transparent plate 21" while the other transparent plate 2 may be referred to as a "second transparent plate 22".

The spacers 5 are disposed between the first transparent plate 21 and the second transparent plate 22. The distance between the two adjacent transparent plates 21 and 22 can be maintained by the spacers 5. The outer periphery of the plurality of transparent plates 2 is surrounded by a sealing material, which is not illustrated, and the space (intermediate layer 6) between the two adjacent transparent plates 21 and 22 is formed in an airtight manner. The intermediate layer 6 is preferably filled with thermal-insulating gas. Examples of the thermal-insulating gas include inert gas such as argon gas. However, the intermediate layer 6 may be filled with air. Alternatively, the intermediate layer 6 may be in a vacuum.

The first transparent plate 21 includes a first surface 211 and a second surface 212. Similarly, the second transparent plate 22 includes a first surface 221 and a second surface 222. The first surfaces 211 and 221 are surfaces on one side of the surfaces (main surfaces) of the transparent plates 2 in the thickness direction. The second surfaces 212 and 222 are main surfaces on the side opposite to the first surfaces 211 and 221. In the present embodiment, the first surfaces 211 and 221 of the adjacent transparent plates 2 mean surfaces facing each other (the inner surfaces in the thickness direction of the window material 1) and the second surfaces 212 and 222 thereof mean outer surfaces of the window material 1.

Note that although the window material 1 according to the present embodiment is a paired glass including the two transparent plate 2, the window material 1 may be a triple glass including three transparent plates 2, or may be configured of four or more transparent plates 2.

### Metal layer 3

The metal layer 3 is stacked on the transparent plates 2 to improve the heat insulation of the window material 1. The metal layer 3 is preferably a low-E film. Although the low-E film is not particularly limited, examples thereof include a film in which a transparent dielectric layer, an infrared reflecting layer, and a transparent dielectric layer are stacked in this order. Examples of the transparent dielectric layers include metal oxides (for example, zinc oxide and tin oxide) and metal nitrides. Examples of the infrared reflecting layer include a metal film (for example, silver) and a semiconductor film.

It is only necessary for the metal layer 3 to be stacked on any of the plurality of transparent plates 2. In the present embodiment, the metal layer 3 is stacked on the first surface 211 of the first transparent plate 21. The metal layer 3 is stacked over the entire first surface 211 of the transparent plate 2. The metal layer 3 is stacked on the transparent plate 2 by, for example, coating, depositing, adhesion, welding, or the like.

### Metasurface film 4

The metasurface film 4 is attached to the transparent plate 2 or the metal layer 3. It is possible to enhance radio wave transmittance in a specific frequency band of radio waves in the window material 1 by attaching the metasurface film 4 to the transparent plate 2 or the metal layer 3. In the metasurface film 4, a base material 42, a plurality of metal patterns 41, and a protective film 44 are stacked in this order as shown in Fig. 2. The metasurface film 4 according to the present embodiment is attached to the second surface 212 of the first transparent plate 21. The metasurface film 4 may be adapted to cover the entire surface of the transparent plate 2 or may be adapted to be attached only to a portion of the entire surface.

### Base material 42

The base material 42 supports the plurality of metal patterns 41. The base material 42 is transparent in the present embodiment. The base material 42 is attached to the transparent plate 2 or the metal layer 3. The base material 42 is provided with an adhesive layer (hereinafter, referred to as a first adhesive layer 45) on the surface on the side opposite to the metal patterns 41. The first adhesive layer 45 preferably has a structure in which the first adhesive layer 45 has a large number of multiple capsules that are filled with an adhesive prior to adhesion and adhesion can be achieved by the capsules being pressurized from the base material 42 toward the transparent plate 2 or the metal layer 3 and bursting at the time of adhesion. However, the first adhesive layer 45 may be an adhesive that is applied rather than filling the capsules. Examples of the adhesive include synthetic resins such as an acrylic resin, a silicone resin, and a polyvinyl alcohol resin.

As illustrated in Fig. 2, the outer shape of the base material 42 is a quadrangular shape (more specifically, a square shape) in a plan view in the present embodiment. However, there is no particular limitation on the shape of the base material 42, and examples of the shape of the base material 42 may be a circular shape, an elliptical shape, a star shape, or a heart shape as well as a polygonal shape. The thickness of the base material 42 is uniform over the entire surface. However, the thickness of the base material 42 does not need to be uniform.

Examples of the base material 42 include synthetic resins, fiber reinforced plastics (FRP), carbon, and glass. Examples of the synthetic resins include one or more kinds selected from the group consisting of polyethylene terephthalate (PET), polyethylene, polypropylene, polyvinyl chloride, polystyrene, polymethyl methacrylate, polyester, polyformaldehyde, polyamide, polyphenylene ether, vinylidene chloride, polyvinyl acetate, polyvinyl acetal, AS resins, ABS resins, acrylic resins, fluororesins, nylon resins, polyacetal resins, polycarbonate resins, polyamide resins, and polyurethane resins. The base material 42 may be a composite material of these synthetic resins. The base material 42 according to the present embodiment is composed of a PET film.

The thickness of the base material 42 is preferably equal to or greater than 5 µm, is more preferably equal to or greater than 10 µm, and is further preferably equal to or greater than 20 µm, for example. On the other hand, an upper limit value of the thickness of the base material 42 is preferably equal to or less than 500 µm, is more preferably equal to or less than 130 µm, and is further preferably equal to or less than 100 µm, for example.

The base material 42 preferably has flexibility. The modulus of longitudinal elasticity of the base material 42 is preferably equal to or greater than 0.01 GPa, is more preferably equal to or greater than 1 GPa, and is further preferably equal to or greater than 8 GPa, for example. On the other hand, an upper limit value of the modulus of longitudinal elasticity of the base material 42 is preferably equal to or less than 800 GPa, is more preferably equal to or less than 30 GPa, and is further preferably equal to or less than 20 GPa, for example.

### Metal patterns 41

The metal patterns are fine metal structure portions made of finer structures than the wavelengths of the target radio waves (electromagnetic waves). The metal patterns correspond to split ring resonators in the metasurface (metamaterial) and are also referred to as split ring resonators (SRRs). In this specification, the metal patterns may be referred to as "split ring resonant portions".

The metal patterns 41 are configured of conductors. The metal patterns 41 are formed on the base material 42. Examples of a method of forming the metal patterns 41 on the base material 42 include a method of stacking a thin film body with the metal patterns 41 embedded in a thin-film-shaped dielectric body on the base material 42 and a method of forming the metal patterns 41 on the base material 42 without using any dielectric body.

Examples of the conductors constituting the metal patterns 41 include one or more kinds of silver, gold, copper, platinum, aluminum, titanium, silicone, indium tin oxide, alloys (for example, alloys containing nickel, chromium, and molybdenum), and the like. Examples of the alloys containing nickel, chromium, and molybdenum include those in various grades, such as Hastelloy B-2, B-3, C-4, C-2000, C-22, C-276, G-30, N, W, and X.

The thickness of the metal patterns 41 is preferably equal to or greater than 10 nm, is more preferably equal to or greater than 30 nm, and is further preferably equal to or greater than 100 nm. On the other hand, an upper limit value of the thickness of the metal patterns 41 is preferably equal to or less than 10 µm, is more preferably equal to or less than 5 µm, and is further preferably equal to or less than 4 µm. If the thickness of the metal patterns 41 is equal to or greater than 10 nm, it is possible to secure appropriate radio wave intensity.

Although various shapes are conceivable as the shape of the metal patterns 41 in accordance with a desired frequency band of radio waves for which radio wave transmittance is to be enhanced, the pattern as illustrated in Fig. 2 will be described as an example in the present embodiment. It is possible to enhance radio wave transmittance of the radio waves in a frequency band of a desired range by adjusting the metal patterns 41 and the sizes of the metal patterns 41 in the present embodiment.

As illustrated in Fig. 2, the metal patterns 41 are constituted by a plurality of linear bodies. The linear bodies extend thinly. In the present embodiment, each linear body has a straight line shape. The metal patterns 41 according to the present embodiment are constituted by a pair of first longitudinal portions 411, a pair of first lateral portions 412, a pair of second longitudinal portions 413, and a pair of second lateral portions 414 as the linear bodies. Each metal pattern 41 according to the present embodiment is configured to have one shape of a plurality of connected linear bodies and is separated from adjacent metal patterns 41 without being in contact with the adjacent metal patterns 41.

The first longitudinal portions 411 and the first lateral portions 412 are connected to form a rectangular frame shape. The second longitudinal portions 413 project inward from the centers of the first lateral portions 412 in the longitudinal direction in a region surrounded by the first longitudinal portions 411 and the first lateral portions 412. The second lateral portions 414 are parallel to the first lateral portions 412 and are connected to inner end portions of the second longitudinal portions 413. The second lateral portions 414 are spaced apart from each other and are parallel to each other. Also, the second lateral portions 414 are separated from the first longitudinal portions 411.

The maximum width of the linear bodies of the metal patterns 41 with such a configuration is preferably equal to or less than 2 mm. On the other hand, the maximum width of the linear bodies of the metal patterns 41 is preferably equal to or greater than 10 µm. It is possible to improve a degree of freedom in designing the metal patterns 41 by the maximum width of the linear bodies being equal to or less than 2 mm. It is possible to maintain producibility of the metal patterns while reducing costs by the maximum width of the linear bodies being equal to or greater than 10 µm. The width of the linear bodies means the dimension (thickness) of the linear bodies in the direction orthogonal to the length direction.

The dielectric constant of the metal patterns 41 is preferably equal to or greater than 7. On the other hand, an upper limit value of the dielectric constant is preferably equal to or less than 10000.

Furthermore, the metal patterns 41 preferably have a rotationally symmetric figure. The metal patterns according to the present embodiment have a two-fold symmetric figure. The metal patterns may be a three-fold symmetric figure, a four-fold symmetric figure, or a five-fold symmetric figure.

### Protective film 44

The protective film 44 can protect the metal patterns 41 by covering the plurality of metal patterns 41. The protective film 44 has a size corresponding to the base material 42 in a plan view. Examples of the protective film 44 include a film made of a synthetic resin. Examples of the synthetic resin include at least one kind selected from the group consisting of polyethylene terephthalate (PET), cycloolefin polymer (COP), polyethylene, polypropylene, polyvinyl chloride, polystyrene, polymethyl methacrylate, polyester, polyformaldehyde, polyamide, polyphenylene ether, vinylidene chloride, polyvinyl acetate, polyvinyl acetal, AS resins, ABS resins, acrylic resins, fluororesins, nylon resins, polyacetal resins, polycarbonate resins, polyamide resins, and polyurethane resins.

The protective film 44 preferably contains fluorine. The protective film 44 containing fluorine can hinder transmission of ultraviolet rays and can thus protect the plurality of metal patterns 41 from the ultraviolet rays.

The thickness of the protective film 44 is preferably equal to or greater than 5 µm, is more preferably equal to or greater than 10 µm, and is further preferably equal to or greater than 15 µm. On the other hand, an upper limit value of the thickness of the protective film 44 is preferably equal to or less than 100 µm, is more preferably equal to or less than 50 µm, and is further preferably equal to or less than 25 µm.

The protective film 44 is bonded to the base material 42 via an adhesive layer (hereinafter, referred to as a second adhesive layer 43). Examples of the second adhesive layer 43 include a sticky sheet made of a synthetic resin or a rubber. Examples of the synthetic resin include an acrylic resin, a silicone resin, a polyvinyl alcohol resin, and the like.

### Modification examples

The above embodiment is merely one of various embodiments of the present invention. Various modifications of the embodiment are possible depending on designs or the like as long as the object of the present invention can be achieved. Modification examples of the embodiment will be exemplified below. The modification examples described below can be applied in appropriate combination.

### Modification example 1

The metal patterns 41 may be in a mode as illustrated in Fig. 4, for example. As illustrated in Fig. 4, each metal pattern 41 includes a split ring resonant portion and a surrounding portion 415. Since the split ring resonant portion has the same shape as that of the metal pattern 41 of the above embodiment, it will be denoted by the same reference sign, and description thereof will be omitted.

The surrounding portion 415 surrounds the split ring resonant portion. Although the surrounding portion 415 has a rectangular shape in the present modification example, the shape may be, for example, a circular shape, an elliptical shape, a pentagon shape, a hexagon shape, or the like. It is preferable that the surrounding portion 415 be continuous in the circumferential direction without being disconnected. However, a portion of the surrounding portion 415 may be disconnected.

The minimum distance between the first longitudinal portion 411 and the surrounding portion 415 of the split ring resonant portion is preferably the same as the minimum distance between the first lateral portion 412 and the surrounding portion 415 of the split ring resonant portion. Here, in regard to the term "the same" described herein, it is assumed that a dimensional range within 3% of a dimension of a larger one of a longitudinal dimension and a lateral dimension of each metal pattern 41 is "the same" range.

It is possible to enhance radio wave transmittance for radio waves in two specific frequency bands by adopting the shape in which the integrally connected split ring resonant portion is surrounded by the surrounding portion 415 for each metal pattern 41 in this manner.

### Modification example 2

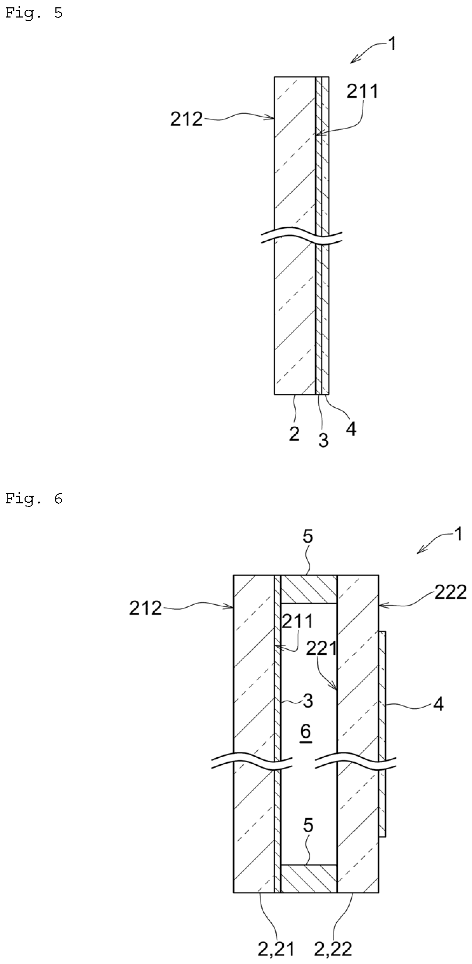

Although the plurality of transparent plates 2 are included in the above embodiment, the window material 1 may include only one transparent plate 2 as illustrated in Fig. 5. As illustrated in Fig. 5, the metal layer 3 is stacked on the first surface 211 of the transparent plate 2. The metasurface film 4 is attached to the metal layer 3. Note that the metasurface film 4 may be attached to the second surface 212 with no metal layer 3 provided thereon.

Also, the metal layer 3 is not limited to the low-E film and may be a thermal insulating film. In the case where the metal layer 3 is a thermal insulating film, the metal layer 3 may be bonded to the first surface 211 or the second surface 212 of the transparent plate 2 after the window material 1 is installed on a window frame, for example.

### Modification example 3

Although the metasurface film 4 is attached to the transparent plate 2 (first transparent plate 21) with the metal layer 3 stacked thereon in the above embodiment, the metasurface film 4 may be attached to a transparent plate 2 (second transparent plate 22) that is different from the transparent plate 2 with the metal layer 3 stacked thereon as illustrated in Fig. 6.

The distance between the metasurface film 4 and the metal layer 3 is preferably equal to or less than 110 mm, is more preferably equal to or less than 30 mm, and is further preferably equal to or less than 10 mm. On the other hand, a lower limit value of the distance between the metasurface film 4 and the metal layer 3 may be 0 mm. In other words, the metasurface film 4 may be bonded directly to the metal layer 3 (see Fig. 5).

### Modification example 4

Although an application of the plurality of metasurface films 4 is not specified in the above embodiment, the metasurface film 4 may include a first metasurface film 4A and a second metasurface film 4B. The first metasurface film 4A is used for uplink (transmission from a terminal to a base station), and the second metasurface film 4B is used for downlink (transmission from the base station to the terminal). Although the first metasurface film 4A and the second metasurface film 4B may have the same structure, intervals of the metal patterns 41 thereof, for example, preferably differ from each other.

The first metasurface film 4A and the second metasurface film 4B are preferably disposed so as not to overlap each other in a plan view seen from a direction orthogonal to the surface of the window material, and the first metasurface film 4A is preferably provided on the side further inward than the second metasurface film 4B in a building to which the window material is to attached.

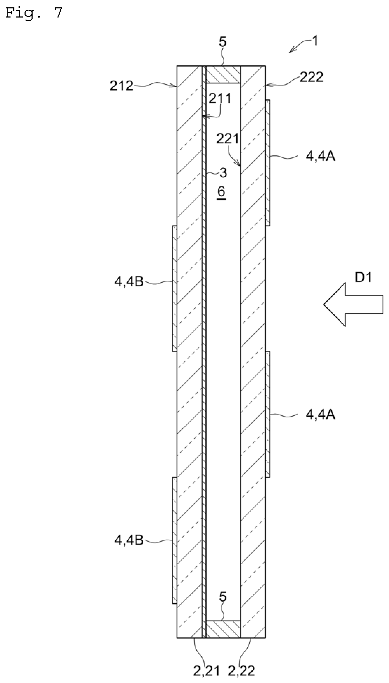

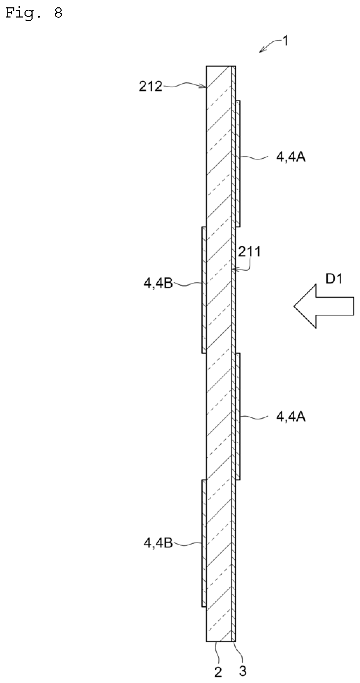

A specific example will be illustrated in Figs. 7 and 8. In Figs. 7 and 8, the right side of the window material 1 is the inward side of the building.

As illustrated in Fig. 7, the window material 1 includes the two transparent plates 2 (the first transparent plate 21 and the second transparent plate 22), the metal layer 3, the plurality of metasurface films 4, and the spacers 5, and the metal layer 3 is stacked on the first surface 211 of the first transparent plate 21. In other words, the structures of the transparent plates 2, the metal layer 3, and the spacers 5 are the same as those illustrated in Figs. 1 and 6.

Among the metasurface films 4, the first metasurface film 4A is attached to the second surface 222 of the second transparent plate 22 on the inward side of the building, while the second metasurface film 4B is attached to the second surface 212 of the first transparent plate 21 on the outward side of the building. Furthermore, the first metasurface film 4A and the second metasurface film 4B are disposed so as not to overlap each other in a plan view seen from a direction D1 orthogonal to the surface of the window material 1.

Note that in the case where the first metasurface film 4A is attached to the second surface 222 of the second transparent plate 22, the second metasurface film 4B may be attached to the metal layer 3 or the first surface 221 of the second transparent plate 22. In the case where the second metasurface film 4B is attached to the second surface 212 of the first transparent plate 21, the first metasurface film 4A may be attached to the metal layer 3 or the first surface 221 of the second transparent plate 22. Alternatively, the first metasurface film 4A may be attached to the first surface 221 of the second transparent plate 22, and the second metasurface film 4B may be attached to the metal layer 3.

As illustrated in Fig. 8, the window material 1 includes one transparent plate 2, the metal layer 3, and the plurality of metasurface films 4, and the metal layer 3 is stacked on the first surface 221 of the transparent plate 2. In other words, the structures of the transparent plate 2 and the metal layer 3 are the same as those illustrated in Fig. 5.

Among the metasurface films 4, the first metasurface film 4A is attached to the metal layer 3, and the second metasurface film 4B is attached to the second surface 212 of the transparent plate 2. Furthermore, the first metasurface film 4A and the second metasurface film 4B are disposed so as not to overlap each other in a plan view seen from a direction D1 orthogonal to the surface of the window material 1.

In this manner, the first metasurface film 4A is provided on the side further inward than the second metasurface film 4B in the building, and the first metasurface film 4A and the second metasurface film 4B are disposed so as not to overlap each other in a plan view seen from the direction D1 orthogonal to the surface of the window material 1 in Figs. 7 and 8. In this manner, it is possible to efficiently transmit both uplink radio waves and downlink radio waves.

Note that the first metasurface film 4A and the second metasurface film 4B may partially overlap one another in a plan view seen from the direction D1 in Figs. 7 and 8.

### Examples

A test for confirming the effect of the window material according to the present invention was carried out. As window materials, a test piece in an example was produced, test pieces in Comparative examples 2 to 4 were also produced, and the evaluation test was conducted by the following method. Note that in Comparative example 1, the test was conducted without any test pieces. However, the window material of the present invention is not limited to that in the example.

### Example

The metasurface film of the examples is the same as the metasurface film 4 of the embodiment. As the metasurface film of the example, patterns with a thickness of 1.8 µm were formed on a PET film (base material) with a thickness of 0.1 mm. For the patterns, copper was used. As the transparent plates used in the example, two glasses manufactured by YKK AP Inc. were used. The thickness of each glass plate was 6 mm, and the gap between the two adjacent glass plates was 12 mm. A low-E film as a metal layer was stacked on the inner side of one of the two glass plates.

### Comparative example 2

For the test piece of Comparative example 2, two transparent plates with no metal layer were used. As the transparent plates, two glass plates manufactured by YKK AP Inc. were used similarly to the example. The thickness of each glass plate was 6 mm, and the gap between the two adjacent glass plates was 12 mm. No metasurface films were attached.

### Comparative example 3

For the test piece of Comparative example 3, two glass plates manufactured by YKK AP Inc. were used as two transparent plates similarly to the example. The thickness of each glass plate was 6 mm, and the gap between the two adjacent glass plates was 12 mm. A low-E film as a metal layer was stacked on the inner side of one of the two glass plates. No metasurface films were attached.

### Comparative example 4

For the test piece of Comparative example 4, two glass plates manufactured by YKK AP Inc. were used as two transparent plates similarly to the example. The thickness of each glass plate was 6 mm, and the gap between the two adjacent glass plates was 12 mm. A copper foil as a metal layer was stacked on the inner side of one of the two glass plates. No metasurface films were attached.

### Test method

In an anechoic chamber, a network analyzer (PNA E8363C manufactured by Keysight Technologies) and a transmitter and a receiver (HA-0218G-NF manufactured by FT-RF) were connected via RF cables. The transmitter and the receiver were installed in such a manner that the distance between the antennas was 60 cm, the test pieces were placed at the center of the transmitter and the receiver, and measurement was conducted.

The frequency was changed from 2 GHz to 6 GHz, and the intensity of radio waves received by the receiver was measured at each frequency.

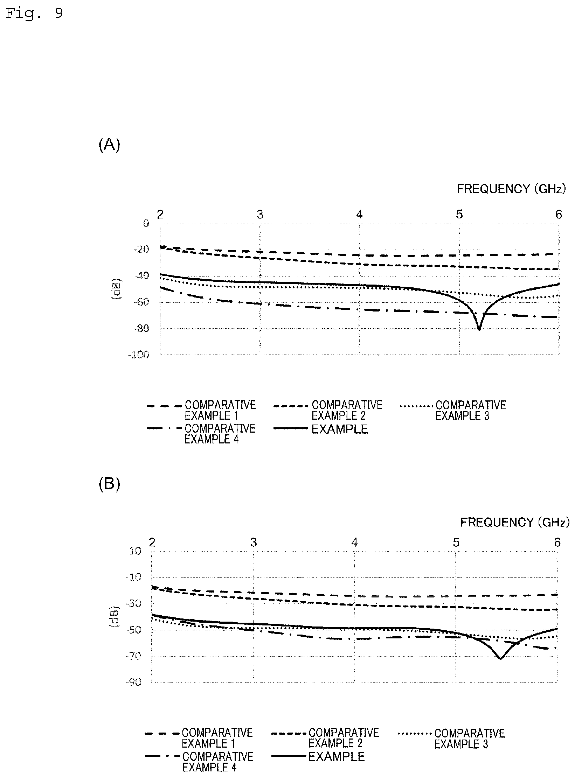

Figs. 9(A) and 9(B) show test results. Fig. 9(A) shows the results in a case where the transmitter was placed so as to face the metasurface films, and Fig. 9(B) shows the results in a case where the receiver was placed so as to face the metasurface films.

As can be seen from comparison among Comparative examples 2, 3, and 4, radio waves transmitted through the transparent plates with the metal layer were largely intercepted over the entire range from 2 GHz to 6 GHz. On the other hand, in comparison between the example and Comparative example 3, it was possible to ascertain that the radio waves were relatively easily transmitted in a specific frequency band (a range of equal to or greater than about 5.5 GHz).

It was thus possible to ascertain that radio wave transmittance only in a specific frequency band of the radio waves was able to be enhanced by attaching the metasurface films even when the metal layer was included.

Note that in Figs. 9(A) and 9(B), there are trough portions (around 5.2 GHz) recessed downward are present in the graphs of the example. It is known that the trough portions are generated due to the metal patterns, and it is possible to appropriately adjust the position of the trough portion by changing the shape and/or the size of the metal patterns.

### Description of Reference Numerals

- 1: Window material
- 2: Transparent plate
- 21: First transparent plate
- 211: First surface
- 212: Second surface
- 22: Second transparent plate
- 221: First surface
- 222: Second surface
- 3: Metal layer
- 4: Metasurface film
- 4A: First metasurface film
- 4B: Second metasurface film
- 41: Metal pattern
- 42: Base material
- 44: Protective film

## Claims

1. A window material comprising:
at least one transparent plate;
a metal layer that is stacked on the at least one transparent plate; and
at least one metasurface film,
the metasurface film including
a base material that is attached to the transparent plate or the metal layer, and
metal patterns that are formed on the base material.

2. The window material according to claim 1,
wherein a plurality of transparent plates disposed at intervals are included as the at least one transparent plate, and
at least one of the metasurface films is attached to a transparent plate that is different from the transparent plate with the metal layer stacked thereon.

3. The window material according to claim 1,
wherein the at least one transparent plate includes a first surface and a second surface on a side opposite to the first surface,
the metal layer is stacked on the first surface, and
at least one of the metasurface films is attached to the second surface.

4. The window material according to any one of claims 1 to 3,
wherein a first metasurface film and a second metasurface film are included as the at least one metasurface film,
the first metasurface film is for uplink, and
the second metasurface film is for downlink.

5. The window material according to claim 4, wherein the first metasurface film and the second metasurface film are disposed not to overlap one another in a plan view seen from a direction orthogonal to a surface of the window material.

6. The window material according to claim 4, wherein the first metasurface film is provided on a side further inward than the second metasurface film in a building to which the window material is attached.

7. The window material according to any one of claims 1 to 6,
wherein each of the metal patterns is constituted of a linear body, and
a maximum width of the linear body is equal to or less than 100 µm.

8. The window material according to any one of claims 1 to 6, wherein the metasurface film further includes a protective film that covers the metal patterns.

9. The window material according to claim 8, wherein the protective film contains fluorine.

10. The window material according to claim 1, wherein the metal layer is a low-E film.

11. The window material according to claim 1, wherein the metal layer is a thermal-insulating film.

12. A method for producing a window material, comprising:
attaching, to at least one transparent plate with a metal layer stacked thereon,
a metasurface film including a base material and metal patterns formed on the base material.
